# EUROPEAN PATENT APPLICATION

(11) **EP 3 156 115 A1**
(43) Date of publication of application: **19.04.2017**
(21) Application number: 15189472.2
(22) Date of filing: 13.10.2015
(51) Int. Cl.: B01D 46/24, B01D 46/52

(54) **FILTER ELEMENT WITH A PLEATED FILTER BODY AND A FILTER SYSTEM**

(71) Applicant: MANN + HUMMEL GMBH, 71638 Ludwigsburg (DE)
(72) Inventor: ARAGBATAGANGAPA ESWARAPA, Suresh, 560 073 Bangalore (IN); SUSHANTH, Varada, 560090 Bangalore (IN); ANTOMON, Chowalloor Rapheal, 560 058 Bangalore (IN); HC, Anil Kumar, 560058 Bangalore (IN)

(57) **Abstract**

The invention relates to a filter element (10) for filtering of a fluid, comprising a pleated filter body (12) being arranged around a longitudinal axis (L) and having a closed circumference (64), the filter body (12) having pleats (24) extending along the longitudinal axis (L) from a first end face (16) to a second end face (18) of the filter body (12), wherein interior pleat edges (26) of the pleats (24) provide an internal shell (60) and exterior pleat edges (30) of the pleats (24) provide an external shell (62) of the filter body (12), wherein at least one of the pleats (24) is split into two or more pleats (48, 50) along its longitudinal extension.

The invention further relates to a filter system (100) with a housing (110) enclosing releasably such a filter element (10), wherein the filter element (10) is positioned in the housing (110) with a smaller diameter (38) facing towards a fluid inlet (102) and the larger diameter (40) facing towards a cover (114).

## Description

### Technical Field

The invention relates to a filter element for filtering of a fluid, comprising a pleated filter body and a filter system, in particular for air filter systems of combustion engines, in particular for vehicles.

### Prior Art

Permeable sheets of filter media are used widely to remove contaminants from fluid streams and in order to achieve optimal performance of the filter media, the surface of the sheet that is exposed to the fluid stream needs to be large, but in order to avoid excessive size of filter elements, the sheets need to fit into small volumes and are typically pleated to maximize the ratios between filter surfaces exposed to the fluid streams and the overall dimensions of the filter elements.

Pleated filter media are typically formed from continuous or rolled webs and pleats are formed perpendicular to the "machine" or "reel" direction of the media, i.e. to the continuous direction of the media as it comes from a source, such as a supply reel. Simple alternating "zigzag" pleats are commonly used and are simple to form, but are prone to deflection and masking, especially in cases of deep pleats. Some methods have been proposed to inhibit deflection and/or retain spacing between adjacent pleats, but these methods tend to require complex (and thus costly) manufacturing methods (e.g. because they require adjacent layers of pleated filter media to be attached together with adhesive), they are not versatile because their geometry is static, and/or they are prone to crushing and collapsing.

WO 2014/059014 discloses pleated filter media packs for use in filter elements. A section of filter media is folded in the pleats, with at least some pleats having a major pleat depth. The section of filter media is configured into a tube defining an interior volume with first and second opposite ends. An opening is at the first end. The opening has a diameter. A ratio of the pleat depth to the opening diameter is greater than 0.2. At least some of the pleats at one end of the media pack are inverted. The pleats include major pleats defining the major pleat depth, and minor pleats having a minor pleat depth less than the major pleat depth. At least some of the pleats at the first end are inverted to an opposite direction of the rest of the pleat, along at least a portion of the pleat length from the first end toward the second end. Filter elements are constructed from the described media packs. The filter element has a first open end cap secured to the first end of the media pack, and a second end cap secured to the second end of the media pack. The first open end cap defines an outlet opening for an exit of filtered fluid.

### Disclosure of the Invention

It is an object of the invention to provide a filter element as well as a filter system, in particular for air filter systems of combustion engines, in particular for vehicles, exhibiting a compact design of the filter element and filter system for accommodation reasons as well as an improved filter efficiency together with a longer filter lifetime.

This object is achieved by a filter element for filtering of a fluid, comprising a pleated filter body, wherein at least one of the pleats is split into two or more pleats along its longitudinal extension.

The other claims, the description and the drawings describe advantageous embodiments of the invention.

According to a first aspect of the invention a filter element for filtering of a fluid is proposed, comprising a pleated filter body being arranged around a longitudinal axis and having a closed circumference, the filter body having pleats extending along the longitudinal axis from a first end face to a second end face of the filter body, wherein interior pleat edges of the pleats provide an internal shell and exterior pleat edges of the pleats provide an external shell of the filter body, wherein at least one of the pleats is split into two or more pleats along its longitudinal extension.

A shell is to be understood as an envelope area covering the pleat edges of all the pleats of the filter body.

A conical filter element is designed to increase the filtration area and reduce the initial restriction of the filter system. A filter element with uniform inner diameter and with tapered outer diameter is only possible with different pleat formation, e.g. a transition of an V-shaped pleat design to an M-shaped pleat design. The inner diameter of a filter bellow may be kept the same along the axial extension of the filter element in order to make sure that there is no addition of restriction in the filter system. This allows to provide a raw air inlet of the filter system at the same side as the clean air outlet, which reduces the mounting requirements on the customer side.

The filter body having a closed circumference may in particular be configured as a round filter element as being a commonly used filter shape. The pleats of the filter body therefore are extending along the longitudinal axis direction. If all pleat heights of the different pleats are the same the filter body is cylindrically shaped. Due to the invention at least one of the pleats, in particular all pleats of the filter body are split into two or more pleats along its longitudinal extension. This means that one original pleat edge is for instance defolded into two pleat edges. As the material of the filter medium is not being stretched the pleat heights of the two pleats must be lower that the pleat height of the original pleat. Thus an external diameter of the filter body decreases when going from the original pleat end to the end of the filter body with the increased number of pleats. The shape of the filter body is thus changed from cylindrical to conical when going along the longitudinal axis direction. The transition from the original pleat end to the increased number of pleats end is a continuous transition, there is not a step in the external surface of the filter body. Thus the filter body is tapered accommodating more filter space in a lower volume meaning that the diameter of the filter body is reduced by keeping the same filter medium area. A pressure drop of the fluid, for instance air in the case of an air filter system, traversing the filter body may be reduced as there is more space for the fluid to enter the filter system. The air flow may be optimized as the filter system is more open for the air flow. A more compact design of the filter system for accommodation reasons is possible as well as an improved filter efficiency together with a longer filter lifetime

According to an advantageous embodiment a basically M-shaped pleat is arranged to emerge from at least one V-shaped pleat along its longitudinal extension. Splitting the pleats into an increased number of pleats along the longitudinal extension may be implemented with the transition from a standard V-shaped pleating in the filter body to a basically M-shaped pleating. The one pleat edge of the V-shaped pleat may be split into two pleat edges for the side pleats of an M-shaped pleat, thus forming a middle pleat between the side pleats. Thus the overall height of the two new pleat edges is significantly lower than the height of the original V-shaped pleat. The beginning of the two new pleat edges of the M-shaped pleat may be situated along the longitudinal axis. In an alternative embodiment it is also possible that the two new pleat edges of an M-shaped pleat begin directly at the end face where the V-shaped pleats are arranged.

According to an advantageous embodiment an overall pleat height of the pleats may be decreasing along the longitudinal axis, i.e. the longitudinal extension of the filter body, with decreasing external diameter of the filter body. As the pleat height of the pleats decreases along the longitudinal extension, in particular as the number of pleat edges increases with decreasing pleat height, and the diameter of the internal shell remains constant due to the cylindrical shape of the internal shell, the diameter of the filter body decreases too. The decrease of the pleat height of the pleats may be implemented in a stepwise manner, as well as in a continuous manner, according to individual fluid flow conditions to be realized. Alternatively, an overall pleat height of the pleats may be decreasing along the longitudinal extension with decreasing internal diameter of the filter body.

According to an advantageous embodiment the M-shaped pleats may be provided at the side of the filter body having a smaller external diameter than the opposite side of the filter body. As the overall pleat height of the M-shaped pleats is significantly lower than the overall pleat height of the V-shaped pleats the M-shaped pleats are favorably positioned at the end face of the filter body exhibiting a smaller diameter. Thus the fluid flow resistance along the longitudinal axis direction of the filter element is reduced.

According to an advantageous embodiment V-shaped pleats may be provided at the side of the filter body having a larger external diameter than the opposite side of the filter body. As the overall pleat height of the V-shaped pleats is significantly larger than the overall pleat height of the V-shaped pleats the V-shaped pleats are favorably positioned at the end face of the filter body exhibiting a larger diameter. Thus the fluid flow resistance along the longitudinal axis direction of the filter element is reduced.

According to an advantageous embodiment at least one segment of the internal shell of the filter body may be cylindrical and at least one segment of the external shell may be conical. Favorably the internal shell, for instance representing a clean side of the filter element for a filter element with a flow direction from the outside to the inside, may be kept cylindrical for advantageous flow of the filtered fluid out of the filter system, whereas the external shell of the filter body due to the increasing number of pleat edges from one end face of the filter body to the other end face exhibits a conical shape. This conical shape may reduce the initial pressure drop when being exposed to the fluid inlet of the filter system, because of reducing the fluid resistance in the longitudinal axis direction due to increased space for fluid flow in the filter system. The cone shape may exhibit a cone angle of more than 2%, and less than 15%, in particular less than 10%.

According to an advantageous embodiment at least one segment of the internal shell of the filter body may be conical and at least one segment of the external shell may be cylindrical. Alternatively it is possible that the shape of the filter body may be arranged the other way round, meaning that the internal shell may be conical and the external shell may be cylindrical. This configuration may be favorable in cases where the fluid flow of the filtered fluid is reduced due to the conical internal shell guiding the filtered fluid to the outlet of the filter system. The incoming fluid for filtering remains constant along the longitudinal axis between a cylindrical external surface of the filter body and an inner wall of a filter system housing.

According to an advantageous embodiment the external shell of the filter body may comprise a cylindrical segment and a conical segment along the longitudinal extension. According to a favorably configuration different longitudinal segments of the filter body along the longitudinal axis may exhibit different pleat categories. There may exist a cylindrical segment of the external shell, thus comprising V-shaped pleats only. On the other hand there may also exist a conical segment of the external shell, thus comprising a transition between V-shaped pleats and M-shaped pleats along the longitudinal axis. Both longitudinal segments may be arranged adjoining to each other.

According to an advantageous embodiment the external shell of the filter body may be continuously cylindrical along its longitudinal extension. In an alternative embodiment it may also be possible that the external shell is completely cylindrical shaped along its longitudinal axis. The internal shell of the filter body may nevertheless be conically shaped as well.

According to an advantageous embodiment in an M-shaped pleat a height of a middle pleat of the M-shaped pleat may not be more than 50% of a height of side pleats of the M-shaped pleat, in particular the height of the middle pleat may be between at least 25% and not more than 50% of the height of the side pleats. M-shaped pleats may be implemented in different variations as the middle pleat of an M-shaped pleat may exhibit various heights compared to the pleat heights of the side pleats of the M-shaped pleat. Advantageously therefore a height of a middle pleat of the M-shaped pleat may in particular exhibit a height of the middle pleat between 25% and 50% of the height of the side pleats. Thus the fluid flow of the incoming fluid may be influenced in a favorable manner according to an increased filter efficiency.

According to an advantageous embodiment at least part of the external shell may be covered by an incoming-flow protection. The filter elements inserted in filter systems may be equipped with an incoming-flow protection, which may be realized as a plastics foil wound as a cylindrical body around part of the filter body, particularly near the fluid inlet of the filter system, or the dirt outlet of the filter system. The incoming-flow protection serves for protection of the relatively tangible filter medium in view of incoming fluid at high speed and/or pressure or particles which may damage the filter medium. Additionally the incoming-flow protection may be used for handling the filter element without touching the filter medium itself. In alternative embodiments the incoming-flow protection may be installed instead on the filter element itself in the interior of the housing of the filter system as a cylindrical integral part of the housing between housing body and the filter element, formed by the same material as the housing, e.g. reinforced plastics material. In this case the incoming-flow protection may of course not be used as a handling protection of the filter medium.

According to another aspect of the invention a filter system for filtering of a fluid is proposed, comprising a housing for enclosing releasably a filter element comprising a pleated filter body configured to have V-shaped pleats and M-shaped pleats, and provided with a housing body and a cover. Further the filter system comprises a fluid inlet for feeding the raw fluid into the housing, a fluid outlet for guiding the filtered fluid out of the housing, as well as a dirt outlet for removing deposited particles. The filter element is positioned in the housing with a smaller diameter facing towards the fluid inlet and the larger diameter facing towards the cover. The fluid inlet may in particular be positioned on one end of the housing, such that the incoming fluid is guided along the total filter body, starting with the end of the filter body with the smaller diameter. Thus the fluid flow resistance as well as the initial pressure drop may be reduced. The fluid outlet may in particular be positioned on one end of the housing, such that the filtered fluid may be guided out of the filter element in the longitudinal axial direction for increased filter efficiency and reduced pressure drop.

According to an advantageous embodiment the filter body may be arranged with its M-shaped pleats close to the fluid inlet. This allows for a reduced pressure drop of the incoming fluid as there is more space available in the filter system for the fluid due to the conical shape of the filter element with a reduced diameter at the end of the filter element with M-shaped pleats. Therefore the fluid may spread over the total length of the filter element for traversing the filter medium.

According to an advantageous embodiment the fluid inlet may be positioned in the housing body for tangentially feeding the fluid to an external surface of the filter element. In particular favorably the fluid flow of the incoming fluid may be guided tangentially to the external surface of the filter body for an extended lifetime of the filter body. Thus the filter body is advantageously protected from a too high pressure of the incoming fluid and will not be risked to be damaged by high incoming fluid pressure. Also the fluid flow resistance is decreased by tangential inlet of the fluid.

According to an advantageous embodiment a supporting tube may be provided in the housing, wherein the filter element is arranged radially around the supporting tube. Inside the filter element a supporting tube may be positioned in order to support and stabilize the filter element, in particular if the filter elements comprises the filter body only, which may not be self-supporting. The supporting tube favorably supports the filter body against high fluid flow pressure. The supporting tube may be fixed in the housing of the filter system, where the filter body is arranged on top and around the supporting tube. Alternatively the supporting tube may also be part of the filter element and be changed with changing the filter element for maintenance reasons, respectively.

According to an advantageous embodiment a secondary filter element may be arranged between the supporting tube and an internal surface of the filter element. The secondary filter element may serve as a filter which protects the clean side of the filter system in case of changing the filter element from being covered with dust from the changed filter element or from the outside when there is no filter element in the filter system. The secondary filter element may be realized as a sleeve put over the supporting tube and being arranged below the internal surface of the filter element on the clean side of the filter element.

### Brief Description of the Drawings

The present invention together with the above-mentioned and other objects and advantages may best be understood from the following detailed description of the embodiments, but not restricted to the embodiments, wherein is shown in:
- Figure 1: in a schematic isometric view an example embodiment of a filter element according to the invention, with a transition from V-shaped pleats to M-shaped pleats along the longitudinal axis resulting in a conical external shape;
- Figure 2: in a schematic isometric view a further example embodiment of a filter element according to the invention, with two longitudinal segments with a cylindrical and a conical external shape due to a transition from V-shaped pleats to M-shaped pleats along the longitudinal axis;
- Figure 3: in a side view an example embodiment of a filter element according to the invention with a conical external shape;
- Figure 4: in a section a filter body with V-shaped pleating;
- Figure 5: in a section a filter body with M-shaped pleating according to the invention;
- Figure 6: in a sectional view an example embodiment of a filter system according to the invention with a filter element with a conical external shape;
- Figure 7: in a schematic isometric view an example embodiment of a filter element according to the invention featuring a cylindrical internal shape and a conical external shape;
- Figure 8: in a sectional view an example embodiment of a filter system according to the invention with the filter element of Figure 7 combined with an incoming-flow protection of the filter element;
- Figure 9: in a schematic isometric view a further example embodiment of a filter element according to the invention with two longitudinal segments with a cylindrical and a conical external shape due to a transition from V-shaped pleats to M-shaped pleats along the longitudinal axis;
- Figure 10: in a sectional view an example embodiment of a filter system according to the invention with the filter element of Figure 9 combined with an incoming- flow protection of the filter element;
- Figure 11: in a schematic isometric view an example embodiment of a filter element according to the invention with three longitudinal segments with a cylindrical, a conical and another cylindrical external shape due to a transition from V-shaped pleats to M-shaped pleats along the longitudinal axis; and
- Figure 12: in a sectional view an example embodiment of a filter system according to the invention with the filter element of Figure 11 combined with an incoming-flow protection of the filter element.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

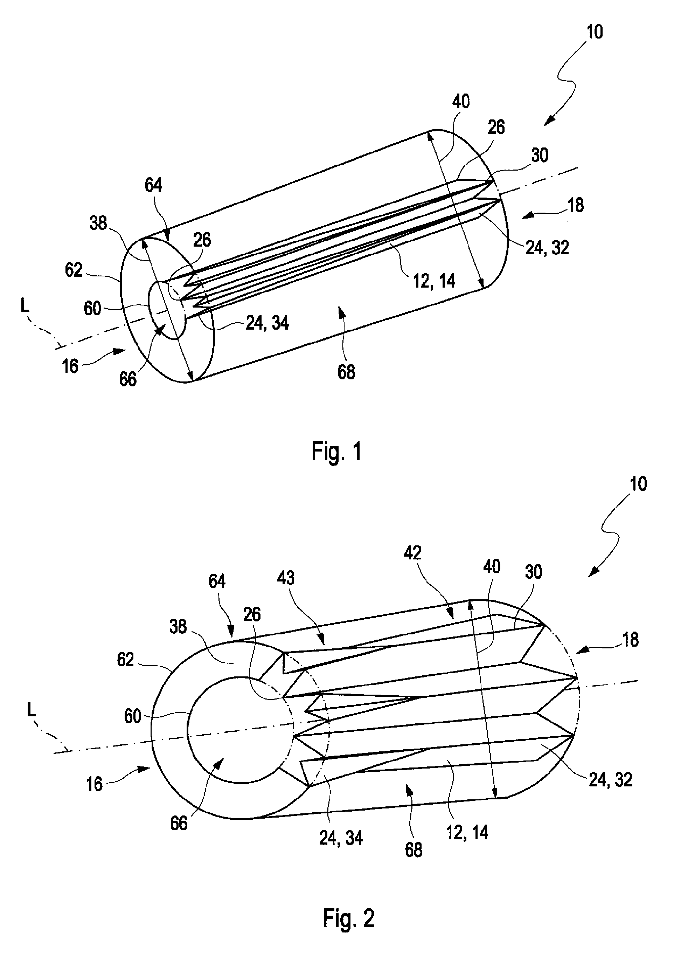

Figure 1 depicts in a schematic isometric view an example embodiment of a filter element 10 for filtering of a fluid according to the invention. The filter element 10 has a pleated filter body 12 with a closed circumference 64 and is arranged around its longitudinal axis L. The filter body 12 is provided with an internal shell 60 which includes the interior pleat edges 26 and an external shell 62, which includes the exterior pleat edges 30. Pleats 24 are extending along the longitudinal axis L. The filter element 10 is configured to display V-shaped pleats 32 at one end face 18 and M-shaped pleats 34 at the opposing end face 16. In this embodiment, the M-shaped pleats 34 emerge from the outmost pleat edges 30 of the V-shaped pleats 32. In particular, there is a continuous transition from V-shaped pleats 32 to M-shaped pleats 34 along the longitudinal axis L starting at the end face 18, thus resulting in a conical shape of the external shell 62. In Figure 1 only two pleats 24 are shown for clarity. Further the internal shell 60 as well as the external shell 62 are sketched as an envelope of the pleat edges 26, 30.

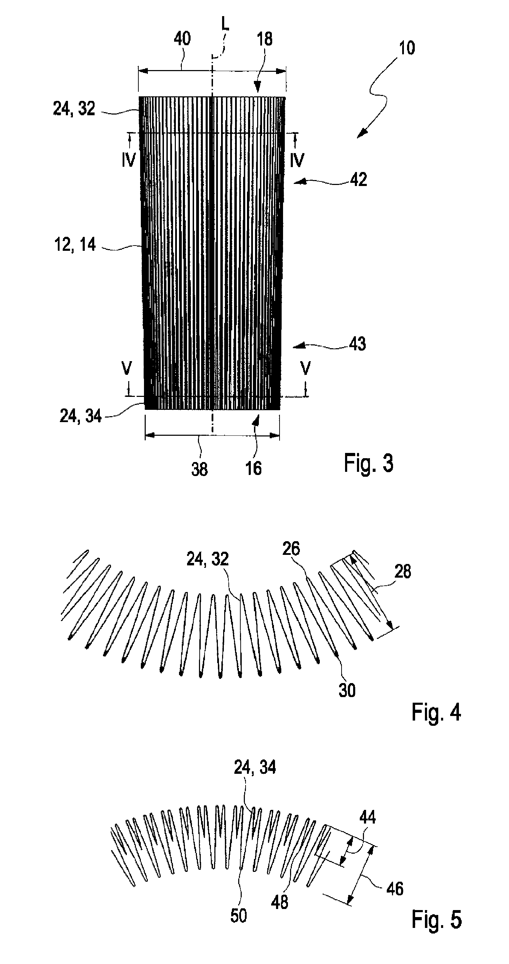

The filter element 10 is depicted without any end plates 20, 22, in order to explicitly show the pleats 24. Examples of end plates 20, 22 attached to a filter element 10 are shown in Figure 5, for instance.

The number of pleat edges 30 of the pleats 24 increases along the longitudinal axis L, i.e. along the longitudinal extension of the filter body 12, as the M-shaped pleats 34 emerge from the V-shaped pleats 32 along the longitudinal extension. Thus at least the segment 66 of the internal shell 60 of the filter body 12 is cylindrical and at least the segment 68 of the external shell 62 is conical. An overall pleat height 28, 46 of the pleats 24 is increasing along the longitudinal axis L with increasing diameter of the filter body 12 (shown in Figures 4 and 5). The filter body 12 exhibits the smaller diameter 38 at the end face 16 and the larger diameter 40 at the end face 18. The M-shaped pleats 34 are provided at the side of the filter body 12 having a smaller diameter 38 than the opposite side of the filter body 12, whereas the V-shaped pleats 32 are provided at the side of the filter body 12 having a larger external diameter 40 than the opposite side of the filter body 12.

In an alternative embodiment (not shown) it is also possible that at least the segment 66 of the internal shell 60 of the filter body 12 is conical and at least the segment 68 of the external shell 60 is cylindrical. Further the filter body 12 could also exhibit a cylindrical external shell 62 along its longitudinal extension over the total length of the filter body.

In Figure 2 a schematic isometric view of a further example embodiment of a filter element 10 according to the invention is depicted. Two longitudinal segments 42, 43 of the filter element 10 have a cylindrical and a conical external shape, respectively, due to M-shaped pleats 34 emerging from V-shaped pleats 32 along the longitudinal axis L. The external shell 62 of the filter body 12 has a cylindrical segment 42 and an adjoining conical segment 43. The cylindrical segment 42 exhibits V-shaped pleats 32 along its longitudinal extension. In segment 43 the M-shaped pleats 34 of the conical segment 43 emerge from V-shaped pleats 32 up to the first end face 16, thus forming a partially cylindrical, partially conical shape of the external shell 62. Alternatively, the segment 42 comprising the V-shaped pleats 32 may be configured conically, too, so that the filter body may have a conical shape along its longitudinal extension.

Figure 3 depicts in a side view an example embodiment of a filter element 10 according to the invention with a conical external shape. The filter body 12 exhibits V-shaped pleats 32 starting from the second end face 18 with emerging M-shaped pleats 34 therefrom up to the first end face 16, thus forming the filter body 12 with a conical shape. The filter body 12 has a larger diameter 40 at the second end face 18 displaying V-shaped pleats 32 and a smaller diameter 38 at the first end face 16 displaying M-shaped pleats 34.

Figure 4 shows in a section the filter body 12 of Figure 3 with V-shaped pleating. The V-shaped pleats 32 exhibit a full pleat height 28. The V-shaped pleats 32 have two side pleats which meet in a pleat edge 26, 30.

Figure 5 shows in a section the filter body 12 of Figure 3 with M-shaped pleating according to the invention. The M-shaped pleats 34 have two side pleats 50 separated by a middle pleat 48 which points in the opposite direction of the V-shaped pleats 32 (Figure 4).

The pleat height 46 at side pleats 50 is larger than a pleat height 44 at the middle pleat 48. The middle pleat 48 is significantly lower than the pleat height 46. In the M-shaped pleat 34 the height 44 of the middle pleat 48 of the M-shaped pleat 34 is not more than 50% of the height 46 of the side pleats 50 of the M-shaped pleat 34, in particular is the height 44 of the middle pleat 48 between at least 25% and not more 50% of the height 46 of the side pleats 50.

Both pleat heights 44, 46 may be on average significantly lower than the pleat height 28 of the V-shaped pleats 32, thus forming the conical shape of the filter body 12.

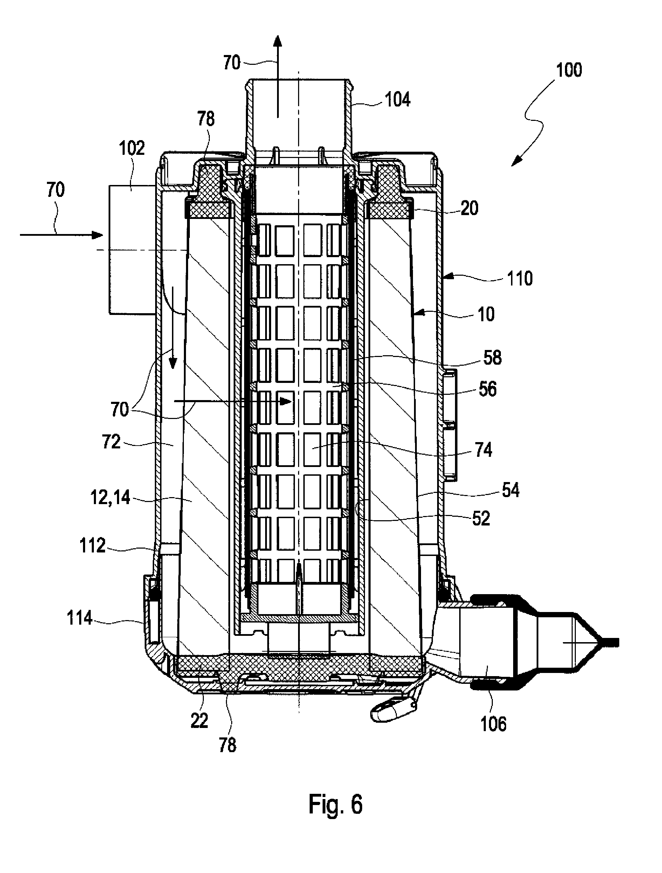

Figure 6 illustrates in a sectional view an example embodiment of a filter system 100 according to the invention with a filter element 10 with a conical external shape. The filter system 100 for filtering of a fluid comprises a housing 110 for enclosing releasably a filter element 10 having a pleated filter body 12 as described in the preceding embodiments, The filter system 100 is provided with a housing body 112 and a cover 114.

Further the filter system 100 comprises a fluid inlet 102 for feeding the raw fluid into the housing 110, a fluid outlet 104 for guiding the filtered fluid out of the housing 110, and a dirt outlet 106 for removing deposited particles. The fluid inlet 102 is arranged predominantly at one end of the filter element 10. The conical filter element 10 is positioned in the housing 110 with the smaller diameter 38 facing towards the fluid inlet 102 and the larger diameter 40 facing towards the cover 114. The fluid inlet 102 is positioned in the housing body 110 for tangentially feeding the fluid to the external surface 54 of the filter element 10.

A supporting tube 56 is provided in the housing 110, wherein the filter element 10 is arranged radially around the supporting tube 56. A secondary filter element 58 is provided, arranged between the supporting tube 56 and the internal surface 52 of the filter element 10.

The filter element 10 is mounted in the housing body 112, which is then closed by the cover 114, thus fixing the filter element 10 by pressing the filter element 10 by its end plates 20, 22 in the housing body 112 and the cover 114.

The filter element 10 is provided with the end plates 20, 22 at both end faces 16, 18 of the filter body 12 for sealing the clean side 74 against the raw side 72 of the filter element 10 as well as providing mechanical stability for mounting the filter element 10 in the housing 110 of the filter system 100. The fluid, e.g. air in the case of an air filter system, is entering the housing via the fluid inlet 102 in fluid flow direction 70. The fluid is fed tangentially to the external surface 54 of the filter body 12 and flows along the filter element 10 in the direction to the second end plate 22, simultaneously traversing the filter body 12 part by part along its way. When traversing the internal surface 52 of the filter body 12 the fluid enters the secondary filter element 58 finally entering the clean side 74 of the filter system inside the supporting tube 56. The filtered fluid leaves the filter system 100 via the fluid outlet 104 of the housing 110. Dust or other deposited particles may be removed via the dirt outlet 106 during operation of the filter system 100 with the mounted filter element 10.

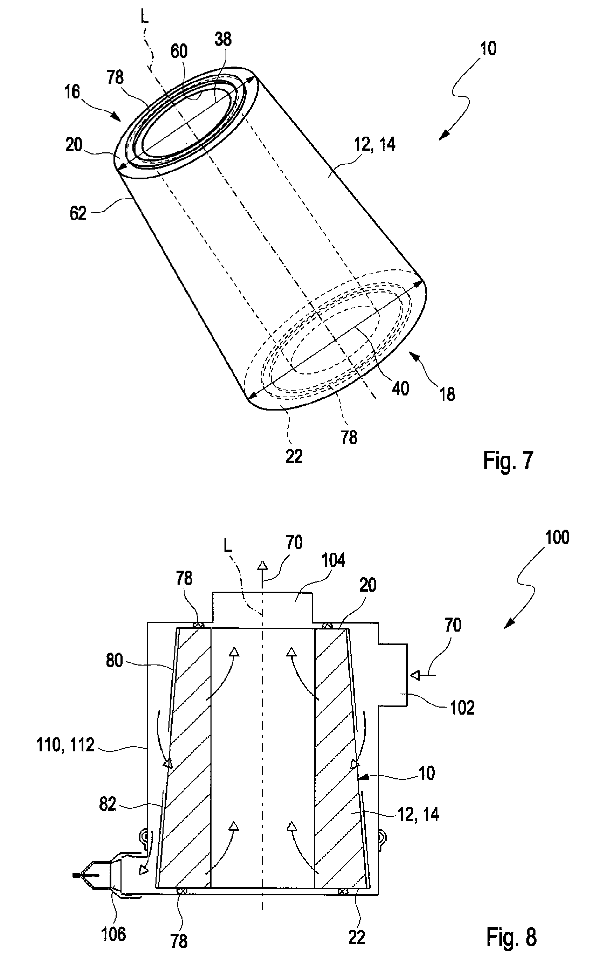

In Figures 7, 9, 11 different embodiments of filter elements 10 are depicted, which are inserted in filter systems 100, shown in Figures 8, 10, 12. The filter elements 10 inserted in the filter systems 100 are all equipped with an incoming-flow protection 80, 82, which may be realized as a plastics foil wound as a cylindrical body around part of the filter body 12, particularly near the fluid inlet 102, or the dirt outlet 106. The incoming-flow protection 80, 82 serves for protection of the relatively tangible filter medium 14 in view of incoming fluid at high speed and/or pressure or particles which may damage the filter medium 14. Additionally the incoming-flow protection 80, 82 may be used for handling the filter element 10 without touching the filter medium 14 itself. In alternative embodiments the incoming-flow protection 80, 82 may be installed instead on the filter element 10 itself in the interior of the housing 112 as a cylindrical integral part of the housing 110 between housing body 112 and the filter element 10, formed by the same material as the housing 110, e.g. reinforced plastics material. In this case the incoming-flow protection 80, 82 may of course not be used as a handling protection of the filter medium.

Figure 7 depicts in a schematic isometric view an example embodiment of a filter element 10 according to the invention featuring a cylindrical internal shape and a conical external shape. This filter element 10 is constructed in a similar way to the filter element 10 shown in Figure 1. For a clearer demonstration of the outer shape only a schematic view of the filter body 12 of the filter element 10 is depicted and no individual pleats 24. The filter element 10 also has a pleated filter body 12 with a closed circumference 64 and is arranged around its longitudinal axis L. The filter body 12 is provided with an internal shell 60 which includes the interior pleat edges 26 and an external shell 62, which includes the exterior pleat edges 30. Pleats 24 are extending along the longitudinal axis L. The filter element 10 is configured to display V-shaped pleats 32 at one end face 18 and M-shaped pleats 34 at the opposing end face 16. In this embodiment, the M-shaped pleats 34 emerge from the outmost pleat edges 30 of the V-shaped pleats 32. In particular, there is a continuous transition from V-shaped pleats 32 to M-shaped pleats 34 along the longitudinal axis L starting at the end face 18, thus resulting in the conical shape of the external shell 62. The filter body 12 is provided at the first end face 16 with the first end plate 20 and at the second end face 18 with the second end plate 22. Axial supports 78 are protruding from both end plates 20, 22 in axial direction L for supporting the filter element 10 being mounted in the housing 110 of a filter system 100. The axial supports 78 may be part of the end plates 20, 22. The axial supports 78 may be configured as ring-shaped elements, or the like.

In Figure 8 a sectional view of an example embodiment of a filter system 100 according to the invention with the inserted filter element 10 of Figure 7 combined with an incoming-flow protection 80, 82 of the filter element 10 is illustrated. The filter element 10 is installed with the conical shape towards the fluid inlet 102, such that the smaller diameter 38 of the filter element 10 is located near the fluid inlet 102 and the larger diameter 40 is located near the dirt outlet 106. The incoming fluid is entering the housing 110 of the filter system 100 via the fluid inlet 102. Because of the incoming fluid protection 80 wound around the circumference of the filter element 10 the fluid may not enter the filter body 12 directly but at some distance towards the middle section of the filter element 10. The fluid is then filtered by traversing the filter medium 14 and exits the filter medium 14 towards the interior of the filter element 10, for leaving the filter system 100 via the fluid outlet 104.

As the filter element 10 is positioned with the conical end towards the raw fluid inlet 102, there is a significant gap between the raw fluid inlet 102 and the external shell 62 of the filter element 10. As the raw fluid inlet 102 offers a high restriction to the filter system 100, the large gap/area after the raw fluid inlet 102 compensates for the increased restriction at the raw fluid inlet 102. The center region of the filter element 10 which is not covered by the incoming-flow protection 80, 82, and where the maximum portion of the raw fluid faces the filter element 10, thus allows for utilizing the large filtration area of the filter element 10 resulting in increased dust/dirt holding capacity of the filter element.10. The orientation of the pleats 24 supports the maximum dust collection as according to the fluid flow 70 depicted in Figure 8, the raw fluid faces the external shell 62 at an angle ensuring the maximum utilization of the filtration area which increases the dust collection. The gap between the lower end of the housing body 112 and the bottom portion of the filter element 10 is due to the conical shape of the filter element 10 relatively small. The reduced volume/area away from the fluid inlet 102 accumulates the pre-separated dust which thus helps in moving the dust out of the filter system 100 very easily through the dirt outlet 106.

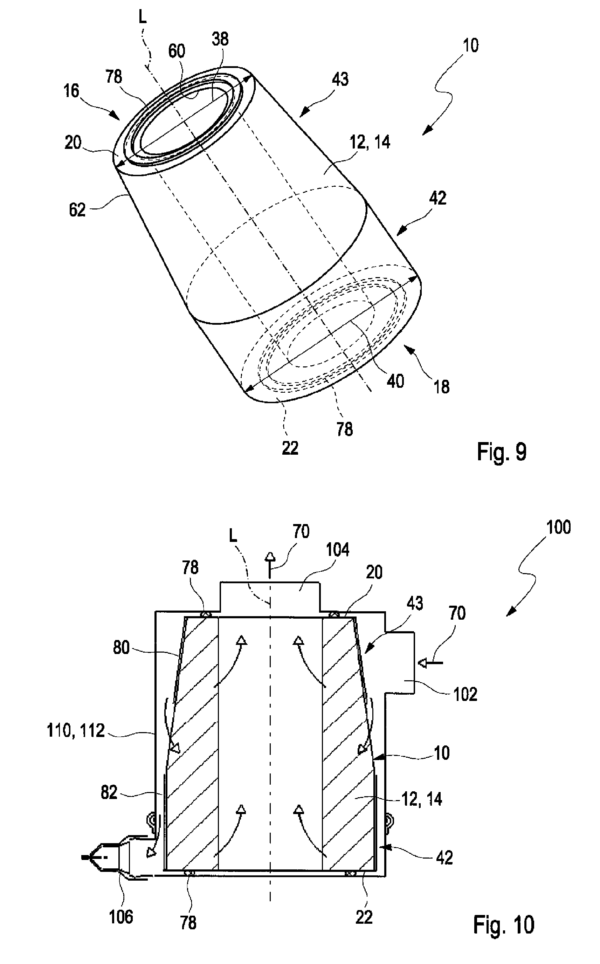

Figure 9 shows in a schematic isometric view a further example embodiment of a filter element 10 according to the invention with two longitudinal segments 42, 43 with a cylindrical and a conical external shape, respectively due to a transition from V-shaped pleats 32 to M-shaped pleats 34 along the longitudinal axis L. As Figure 9 depicts the filter element 10 in a schematic way no pleats 24 are shown in details. The external shell 62 of the filter body 12 has a cylindrical segment 42 and an adjoining conical segment 43. The cylindrical segment 42 exhibits V-shaped pleats 32 along its longitudinal extension. In segment 43 the M-shaped pleats 34 of the conical segment 43 emerge from V-shaped pleats 32 up to the first end face 16, thus forming a partially cylindrical, partially conical shape of the external shell 62.

Figure 10 depicts in a sectional view an example embodiment of a filter system 100 according to the invention with the inserted filter element 10 of Figure 9 combined with an incoming-flow protection 80, 82 of the filter element 10. Positioning of the incoming-flow protection 80, 82 is the same as with the filter element 10 shown in Figure 8, such that the cylindrical segment 42 is covered by the incoming-flow protection 82 on its full cylindrical outer surface.

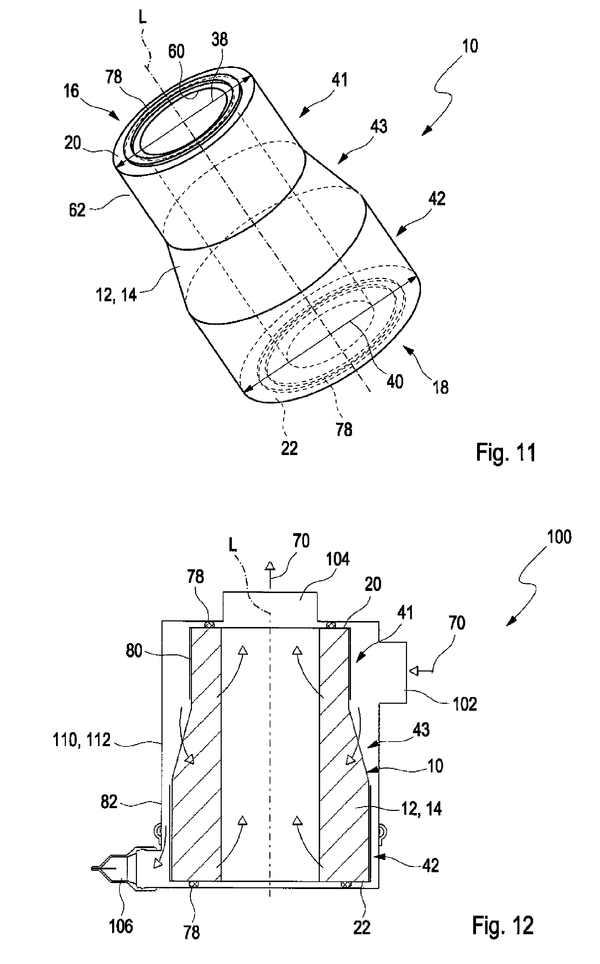

Figure 11 shows in a schematic isometric view an example embodiment of a filter element 10 according to the invention with three longitudinal segments 42, 43, 41, with a cylindrical, a conical and another cylindrical external shape, respectively, due to a transition from V-shaped pleats 32 to M-shaped pleats 34 along the longitudinal axis. In this embodiment the two cylindrical segments 41, 42 with different diameter 38, 40 are joined by a conical segment 43, where M-shaped pleats 34 are transformed into V-shaped pleats 32. Instead of M-shaped pleats 34 also multiple pleating may be used to get segments of the filter body 12 with a smaller diameter 38.

In Figure 12 a sectional view of an example embodiment of a filter system 100 according to the invention with the filter element 10 of Figure 12 combined with an incoming-flow protection 80, 82 of the filter element 10 is illustrated. Positioning of the incoming-flow protection 80, 82 is the same as with the filter element 10 shown in Figure 8, such that the cylindrical segments 42, 41 are covered by the incoming-flow protection 80, 82 on its full cylindrical outer surface.

## Claims

1. A filter element (10) for filtering of a fluid, comprising a pleated filter body (12) being arranged around a longitudinal axis (L) and having a closed circumference (64), the filter body (12) having pleats (24) extending along the longitudinal axis (L) from a first end face (16) to a second end face (18) of the filter body (12), wherein interior pleat edges (26) of the pleats (24) provide an internal shell (60) and exterior pleat edges (30) of the pleats (24) provide an external shell (62) of the filter body (12), wherein at least one of the pleats (24) is split into two or more pleats (48, 50) along its longitudinal extension.

2. The filter element according to claim 1, wherein a basically M-shaped pleat (34) is arranged to emerge from at least one V-shaped pleat (32) along its longitudinal extension.

3. The filter element according to claim 1 or 2, wherein an overall pleat height (28) of the pleats (24) is decreasing along the longitudinal axis (L) with decreasing external diameter (40, 38) of the filter body (12).

4. The filter element according to any one of the preceding claims, wherein the M-shaped pleats (34) are provided at the side of the filter body (12) having a smaller external diameter (38) than the opposite side of the filter body (12).

5. The filter element according to any one of the preceding claims, wherein the V-shaped pleats (32) are provided at the side of the filter body (12) having a larger external diameter (40) than the opposite side of the filter body (12).

6. The filter element according to any one of the preceding claims, wherein at least one segment (66) of the internal shell (60) of the filter body (12) is cylindrical and wherein at least one segment (68) of the external shell (62) is conical.

7. The filter element according to any one of the preceding claims, wherein at least one segment (66) of the internal shell (60) of the filter body (12) is conical and wherein at least one segment (68) of the external shell (62) is cylindrical.

8. The filter element according to any one of the preceding claims, wherein the external shell (62) of the filter body (12) comprises a cylindrical segment (42) and a conical segment (43) along the longitudinal extension.

9. The filter element according to any one of the preceding claims, wherein the external shell (62) of the filter body (12) is cylindrical along its longitudinal extension.

10. The filter element according to any one of the preceding claims, wherein in an M-shaped pleat (34) a height (44) of a middle pleat (48) of the M-shaped pleat (34) is not more than 50% of a height (46) of side pleats (50) of the M-shaped pleat (34), in particular wherein the height (44) of the middle pleat (48) is between at least 25% and not more than 50% of the height (46) of the side pleats (50).

11. The filter element according to any one of the preceding claims, wherein at least a part of the external shell (62) is covered by an incomingflow protection (80, 82).

12. A filter system (100) for filtering of a fluid comprising
- a housing (110) for enclosing releasably a filter element (10) according to any one of the preceding claims, comprising a pleated filter body (12) configured to have V-shaped pleats (32) and M-shaped pleats (34), and provided with a housing body (112) and a cover (114),
- a fluid inlet (102) for feeding the raw fluid into the housing (110),
- a fluid outlet (104) for guiding the filtered fluid out of the housing (110),
- a dirt outlet (106) for removing deposited particles,
wherein the filter element (10) is positioned in the housing (110) with a smaller diameter (38) facing towards the fluid inlet (102) and the larger diameter (40) facing towards the cover (114).

13. The filter system according to claim 12, wherein the filter body (12) is arranged with its M-shaped pleats (34) close to the fluid inlet (102).

14. The filter system according to claim 12 or 13, wherein the fluid inlet (102) is positioned in the housing body (110) for tangentially feeding the fluid to an external surface (54) of the filter element (10).

15. The filter system according to any one of the claims 12 to 13, providing a supporting tube (56) in the housing (110), wherein the filter element (10) is arranged radially around the supporting tube (56).

16. The filter system according to any one of the claims 12 to 15, providing a secondary filter element (58) arranged between the supporting tube (56) and an internal surface (52) of the filter element (10).
